# EUROPEAN PATENT SPECIFICATION

(11) **EP 4 361 575 B1**
(45) Date of publication and mention of the grant of the patent: **13.05.2026**
(21) Application number: 22204497.6
(22) Date of filing: 28.10.2022
(51) Int. Cl.: G01F 1/66, G01S 7/00, G01S 13/00, G01F 23/284, G01S 7/40, G01S 13/88, B01D 15/10

(54) **METHOD FOR MONITORING LIQUID CONTENT**
VERFAHREN ZUR ÜBERWACHUNG DES FLÜSSIGKEITSGEHALTS
PROCÉDÉ DE SURVEILLANCE DE CONTENU LIQUIDE

(43) Date of publication of application: 01.05.2024
(73) Proprietor: Biotage AB, 751 03 Uppsala (SE)
(72) Inventor: FRÖJDH, Håkan, 756 45 UPPSALA (SE); FORSLUND, David, 755 98 UPPSALA (SE); JOHANSSON, Elias, 754 24 UPPSALA (SE)
(74) Representative: Brann AB

(56) References cited:
- EP-B1- 2 496 957
- EP-B1- 2 659 238
- WO-A1-2022/224577
- DE-A1- 102012 103 573
- US-A1- 2012 031 510
- US-A1- 2017 211 963
- US-A1- 2022 221 322

## Description

### TECHNICAL FIELD OF THE INVENTION

The present invention relates to a method for monitoring liquid content in a container used in a bench top fluid handling system and to a bench top fluid handling system comprising a sensor arrangement for monitoring liquid content in a container used in the bench top fluid handling system.

### BACKGROUND

In bench top fluid handling systems, such as for example fluid analyzing systems, separation systems and chromatography systems, it is important to keep track of content in bottles and other containers for different liquids such as solvent and waste handled in the system. If a container run empty the process is disturbed and if a container is overfilled liquid may be wasted and there may be problems with contamination. Overflow of a liquid may also be a safety problem with risk of personal injury. There are different commonly used methods for monitoring liquid levels in containers in these types of systems. One possibility is to use dead reckoning, i.e. information from the pumps in the system about how much liquid is pumped to and from the containers. However, with such a system it is important that the user always correctly updates content in the container when they are refilled or emptied.

Another method for monitoring liquid levels in chromatography systems is disclosed in US7419598 where a bubbler is positioned within a solvent reservoir with its opening near the bottom of the system to measure the pressure of solvent and hereby monitor the level of the solvent. This measuring method is however dependent on density of the liquid and it will often not provide good enough measuring precision to predict if the amount of solvent is enough for the method run or if the remaining empty volume in a waste container is enough for a method run.

In US2003/0175157 a method for fluid content control in a container is disclosed where a weight scale is used for detecting the weight of the fluid in a container. Also in this method a density of the fluid needs to be known or estimated whereby the measuring precision may not be exact, especially for mixed fluids such as in waste containers. Furthermore, weight of the container, weight of tubing provided to the container and any possible other parts of the system coming into contact with the container will affect the measured weight of the container and hereby affect measuring precision. Hereby also the containers need to be positioned free, without contacting anything which may be problematic.

US 2012/031510 A1 discloses a method for monitoring liquid content in a tank in an installation for treatment by chromatography, liquid is pumped to a container filled with liquid and located in the tank, volume of liquid is determined and informed.

### SUMMARY

An object of the present invention is to provide an improved method for monitoring liquid level in containers in bench top fluid handling systems.

A further object of the invention is to provide a reliable and easily handled method and system for monitoring liquid levels in bench top fluid handling systems.

This is achieved by a method, a bench top fluid handling system and a computer program product according to the independent claims.

According to one aspect of the invention a method for monitoring liquid content in a container used in a bench top fluid handling system is provided, whereby liquid is pumped to and/or from said container during a process run in the bench top fluid handling system, said method comprising the steps of:
- detecting a position of a liquid surface in the container by use of a mmWave radar sensor provided in a sensor arrangement attached to the container;
- determining amount of liquid in said container based on said detected position of the liquid surface and on prestored geometry information of said container; and
- presenting information to a user about said determined amount of liquid.

According to another aspect of the invention a bench top fluid handling system is provided comprising:
- a control system;
- at least one container configured to comprise liquid to be pumped to and/or from at least one other component in the bench top fluid handling system;
- at least one sensor arrangement configured to be connected to one of the at least one container and to the control system, said sensor arrangement comprising a mmWave radar sensor which can be positioned in an operating position in relation to the container in which operating position it can detect a position of a liquid surface in the container;
- a pump and fluid connections configured for pumping liquid between said at least one container and said at least one other component, said pump being connected to the control system,
wherein said control system is configured for determining amount of liquid in said container based on said detected position of the liquid surface and on prestored geometry information of said container and wherein said control system is configured for presenting to a user information about said determined amount of liquid.

According to another aspect of the invention a computer program product comprising instructions which, when executed in a processor in a control system provided in a bench top fluid handling system, cause the control system to perform the method according to the invention is provided.

Hereby a reliable monitoring of liquid level in containers is achieved which measures a distance to the liquid level directly and hereby measures liquid levels for all types of liquids and mixed liquids independently of their densities. According to the invention a mmWave radar sensor is used. This is a type of radar technology that transmits signals with a short wavelength in the millimeter range. With a short wavelength the size of system components can be smaller whereby a small and compact radar sensor has been provided which also measures with high accuracy. The radar sensor may for example operate at 55-85 GHz. This type of radar sensor can measure closer distances than previous types of radar sensors which also were larger and bulkier and not suitable for smaller sized containers. A position of the liquid surface in the container is detected by a mmWave radar sensor and the amount of liquid is determined based on said detected position of the liquid surface and on prestored geometry information of said container. This is a direct measuring of the liquid level which is independent of a density of the liquid, whereby a measuring precision and reliability is good both for clean liquids and for mixed liquids, such as in waste containers. Hereby it can efficiently be avoided both to run empty and overfilling of liquid in a container. Hereby the risk for contamination and personal injury by overfilling a waste container is decreased and the liquid content in containers in the system is monitored efficiently. Hereby the user knows at all times how much liquid there is in the container and hereby the user can easily see if the liquid will be enough for the process to be run. Furthermore, the user never needs to manually input any information about liquid volume whereby handling is facilitated for the user and the risk for mistakes is decreased.

According to one embodiment of the invention the step of detecting a position of a liquid surface in the container further comprises subtracting a reference signal from a radar signal received from the mmWave radar sensor, said reference signal being measured with the sensor arrangement comprising said mmWave radar sensor positioned in a free measuring environment, wherein said free measuring environment does not comprise any objects, within a measuring range of the mmWave radar sensor, giving an echo to a radar signal sent from the mmWave radar sensor.

Hereby the radar sensor can be used for detecting a liquid surface also for close distances from the radar sensor. Normally there is a dead zone close to the radar sensor where nothing can be detected due to a strong echo from the radar itself which will hide echoes from other objects within this zone, also called near field of the radar sensor. For a mmWave radar sensor this dead zone may cover for example distances between 0-10 cm from the radar sensor. This echo from the radar itself comes at least partly from a leakage between the transmitting and receiving antenna in the radar sensor. A part of the echo may also come from the sensor arrangement if it is enclosing the radar sensor. Hereby a mmWave radar sensor normally has to be positioned at least 10 cm from the objects to be detected. According to this embodiment of the invention a reference signal is measured with the sensor arrangement comprising said mmWave radar sensor positioned in a free measuring environment, wherein said free measuring environment does not comprise any objects giving an echo to a radar signal sent from the mmWave radar sensor, within a measuring range of the mmWave radar sensor. A measuring range of the radar sensor is the range within which this sensor is configured for being used, for example 0-100 cm. By cancelling out this reference signal from the actually measured signal, this strong echo produced by the radar sensor itself is cancelled out and it will be possible to detect other objects within this dead zone. Without this cancelling out of the reference signal, echoes from objects within the dead zone, i.e. less than 10 cm from the radar sensor will be drown out by the strong echo from the radar itself. Hereby, according to this embodiment of the invention, liquid levels in the container can be detected for all distances from the radar sensor between 0 to for example 100 cm in the container. By measuring this reference signal for each individual radar sensor and by subtracting the reference signal from the actual measured radar signal later during actual measuring also objects close to the radar sensor can be detected. Without this feature it would be difficult to distinguish between an empty and a full container. By this invention the liquid surface can be detected at all levels and the monitoring of liquid content in the container is reliable and efficient. Furthermore, a risk for overfilling a container and possible risk of contamination and personal injury is decreased.

According to one embodiment of the invention the bench top fluid handling system is a chromatography system.

According to one embodiment of the invention the method further comprises the step of detecting if the mmWave radar sensor is positioned in an operating position in which it is possible to detect a position of a liquid surface in the container, and wherein the step of determining amount of liquid in said container comprises a primary determination step in which the determination is based on said detected position of the liquid surface and on prestored geometry information of said container, which primary determination step is performed when the mmWave radar sensor is detected to be provided in the operating position. Herbey it can be assured that the radar sensor is positioned correctly and hereby will provide correct measuring. A wrongly positioned or removed radar sensor would not give correct measuring values and by first detecting a correct operating position of the radar sensor wrong measuring is avoided.

According to one embodiment of the invention said step of detecting if the mmWave radar sensor is positioned in an operating position comprises measuring a tilt angle of a sensor housing comprising said mmWave radar sensor, said tilt angle being measured by an angle sensor provided in the sensor housing, whereby the sensor housing can be moved into at least an open and a closed position in relation to the container which two positions can be differentiated by measuring the tilt angle of the sensor housing and whereby the mmWave radar sensor is only provided in the operating position when the sensor housing is in the closed position.

According to one embodiment of the invention the step of detecting if the mmWave radar sensor is positioned in an operating position comprises measuring the tilt angel of the sensor housing along at least two axes and evaluating by comparing tilting along these at least two axes if a measured tilt angle is caused by a changed position of the sensor housing between the open and closed position or by a tilting of the whole container. A tilting of the whole container would probably include tilting along more than one of the axes while opening and closing of the sensor housing suitably is done by pivoting the sensor housing around a hinge which will be only around one of the axes. Hereby these two situations can be distinguished.

According to one embodiment of the invention the step of determining amount of liquid in said container further comprises a secondary determination step performed when the mmWave radar sensor is not detected to be provided in the operating position, wherein said secondary determination is based on information about pumped liquid volume from one or more pumps provided in the bench top fluid handling system for pumping liquid to and/or from the container. Hereby a process in the system can keep running also when the radar sensor is removed, for example for refilling of the container. By using pump information when the radar sensor is not available for measuring the content in the container can be monitored at all times.

According to one embodiment of the invention the step of determining amount of liquid in said container is further based on information about pumped liquid volume from one or more pumps provided in the bench top fluid handling system for pumping liquid to and/or from the container for detected positions of the liquid surface being closer to a bottom of the container than a predefined threshold. For some liquids it may be difficult to distinguish the liquid surface from the bottom of the container when the liquid surface is close to the bottom and in such cases, it may be suitable to rely on pump information when the liquid surface is closer to the bottom than a predefined distance, i.e. when the container is about to run empty.

According to one embodiment of the invention the method further comprises the step of automatically stop pumping liquid to or from the container when a determined amount of liquid is above and/or below a predetermined threshold.

According to one embodiment of the invention the method further comprises the steps of:
- positioning a sensor housing comprising said mmWave radar sensor in a closed position covering at least a part of a top opening of the container before the step of detecting a position of a liquid surface in the container, whereby the mmWave radar sensor is provided in the operating position for detecting the position of the liquid surface when the sensor housing is positioned in the closed position; and
- positioning said sensor housing in an open position in which the sensor housing is not covering the top opening of the container when new liquid is to be filled into the container, whereby the mmWave radar sensor is not provided in the operating position when the sensor housing is in open position.

According to one embodiment of the invention the method further comprises an initial step of determining the relation between liquid surface position and amount of liquid in the container for each new type of container such that container geometry information for each type of used container can be used in the step of determining amount of liquid in said container.

According to one embodiment of the invention this is a method for monitoring liquid content in a container having a height between 10-100 cm and/or a volume between 0,5-20 liter used in a bench top fluid handling system.

According to one embodiment of the invention said step of detecting a position of a liquid surface comprises measuring a distance between the mmWave radar sensor and the liquid surface in the container by use of the radar sensor which is positioned above the liquid surface in connection with the container.

According to one embodiment of the invention said control system is configured to perform the method according to the invention.

According to one embodiment of the invention said bench top fluid handling system is a chromatography system and wherein said at least one other component comprise at least one chromatography column.

According to one embodiment of the invention the sensor arrangement is configured such that it can be positioned in at least a closed and an open position, wherein in the closed position a sensor housing of said sensor arrangement comprising said mmWave radar sensor is at least partly covering a top opening of the container and in the open position said sensor housing is not covering the top opening of the container.

According to one embodiment of the invention the sensor arrangement comprises an angle sensor (25').

According to one embodiment of the invention the container has a height between 10-100 cm and/or a volume between 0,5-20 liter.

Further embodiments are described in the detailed description.

### BRIEF DESCRIPTION OF THE DRAWINGS

Figure 1a shows schematically a bench top fluid handling system according to one embodiment of the invention.
Figure 1b is a flow chart of a method according to one embodiment of the invention.
Figure 2a is a perspective view of a sensor arrangement which can be used in a bench top fluid handling system according to one embodiment of the invention.
Figure 2b shows a cross section of the sensor arrangement as shown in Figure 2a.
Figure 3a is a perspective view of a container with the sensor arrangement as shown in Figures 2a and 2b attached and provided in a closed position.
Figure 3b is the same container and the same sensor arrangement as shown in Figure 3a where the sensor arrangement is provided in an open position.
Figure 3c is a cross section of the container with attached sensor arrangement as shown in Figure 3a.
Figure 3d is a close up of the cross section of the sensor arrangement as shown in Figure 3c.
Figure 4a is a perspective view of another sensor arrangement which can be used in a bench top fluid handling system according to one embodiment of the invention.
Figure 4b is a perspective view showing only parts of the sensor arrangement as shown in Figure 4a.
Figure 5a is a perspective view of a container with the sensor arrangement as shown in Figures 4a and 4b attached and provided in a closed position.
Figure 5b is the same container and the same sensor arrangement as shown in Figure 5a where the sensor arrangement is provided in an open position.
Figure 5c is a cross section of the container with attached sensor arrangement as shown in Figure 5a.
Figures 6a-6d show graphs of radar sensor signals.
Figure 6e shows a graph of distance measuring accuracy.

### DETAILED DESCRIPTION OF EMBODIMENTS

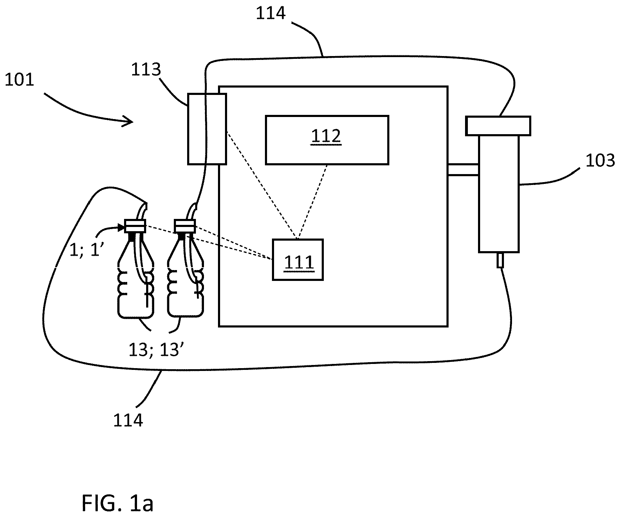

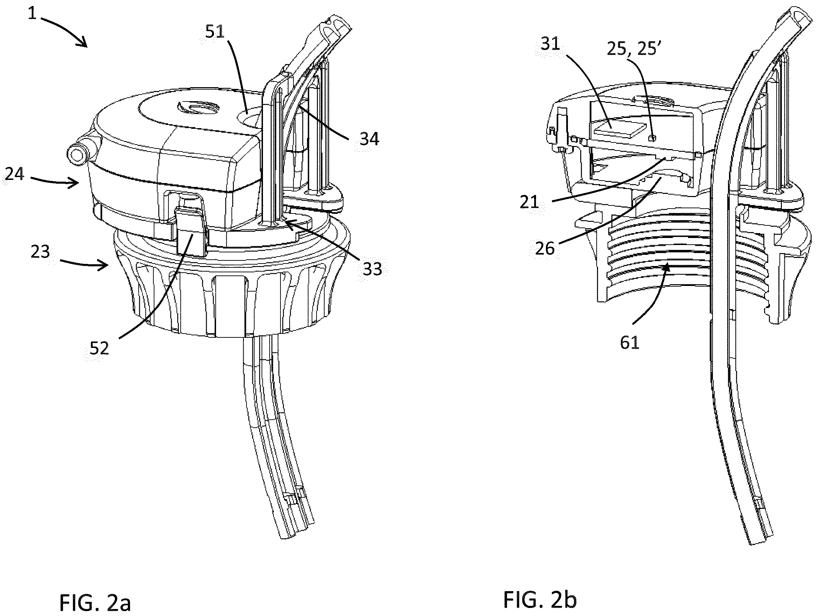

Figure 1a shows schematically a bench top fluid handling system 101 according to one embodiment of the invention. One or more sensor arrangements 1; 1', as will be further described below with reference to Figures 2-5, can be used in the bench top fluid handling system 101 and are then attached to one container 13; 13' each, which containers 13; 13' are used for storing liquid in the bench top fluid handling system 101. In this specific example the bench top fluid handling system 101 is a chromatography system 101, for example a lab chromatography system, also called a small scale chromatography system, whereby one or more chromatography columns 103 can be connected to the chromatograph system 101. In other types of bench top fluid handling systems in which this invention can be used other types of components 103 for treating or analyzing the fluid instead of chromatography columns can be connected to the system. Other examples of bench top fluid handling systems comprise for example filter systems, evaporation systems and other types of separation systems and analyzing systems. The chromatography system 101 comprises furthermore one or more pumps 113 for pumping liquid to and from the containers 13; 13' and the chromatography columns 103. Fluid lines 114 are connecting the containers 13; 13' with the one or more chromatography columns 103. Furthermore, the chromatography system 101 comprises a control system 111 and possibly a display 112. A display may be suitable for presenting information to a user but may be replaced by other alternatives, such as visible or audible signals, automatic stop and/or connection to a display of a connected device such as a computer or telephone. The control system 111 is connected to the display 112, the one or more pumps 113 and to the one or more sensor arrangements 1; 1'. The control system 111 can collect information from both the one or more sensor arrangements 1; 1' about liquid levels in the containers 13; 13' and possibly also information from the one or more pumps 113 about pumped volume to and from the containers 13; 13'. The control system 111 can furthermore suitably present information about liquid levels on the display 112 and control the one or more pumps 113 in dependence of this information.

According to the invention a method for monitoring liquid content in a container 13; 13' used in a bench top fluid handling system 101 by use of a mmWave radar sensor 21 (reference to Figures 2-5) is provided. The bench top fluid handling system 101 can for example be a chromatography system 101 but can also be other types of bench top fluid handling systems, such as other types of separation systems or fluid treatment or analyzing systems. Liquid is pumped to and/or from said container 13; 13' during a process run in the bench top fluid handling system. The mmWave radar sensor 21 is a small and compact new type of radar sensor which can be used for measuring rather small distances compared to prior, larger radar sensors. A mmWave radar sensor is a type of radar technology that transmit signals with a short wavelength in the millimeter range. With a short wavelength the size of system components can be smaller whereby a small and compact radar sensor has been provided which also can measure with high accuracy. The radar sensor may for example operate at 55-85 GHz. The mmWave radar sensor can for example be a pulsed coherent radar sensor, for example operating at 60 GHz, or 55-80 GHz, or 55-65 GHz, or it can be another type of mmWave radar sensor, also called a miniaturized radar sensor. Previous types of radar sensors were larger and bulkier and not suitable to use for smaller sized containers. A mmWave radar sensor can be provided as a single chip solution comprising all necessary components in one chip whereby it is a small and compact and easily integrated radar sensor suitable for this invention. According to this invention it has been realized that this type of mmWave radar sensor can be used for containers of smaller sizes, for example having a height in a range between 10-100 cm and/or a volume in the range of 0,5-220 liters or 0,5-20 liters in a bench top fluid handling system for monitoring liquid levels reliably and with high precision. The mmWave radar sensor 21, also called only radar sensor 21 below, can in some embodiments of the invention be provided in a sensor arrangement 1; 1' as for example disclosed in Figures 2-5, which is configured to be attached to a top opening 11; 11' of the container 13; 13' whereby a convenient and reliable monitoring of liquid levels is achieved.

The method according to the invention comprises a step of detecting a position of a liquid surface in the container 13; 13' by use of the mmWave radar sensor 21. The method comprises furthermore a step of determining amount of liquid in said container 13; 13' based on said detected position of the liquid surface and on prestored geometry information of said container 13; 13'. The method comprises furthermore a step of presenting information to a user about said determined amount of liquid.

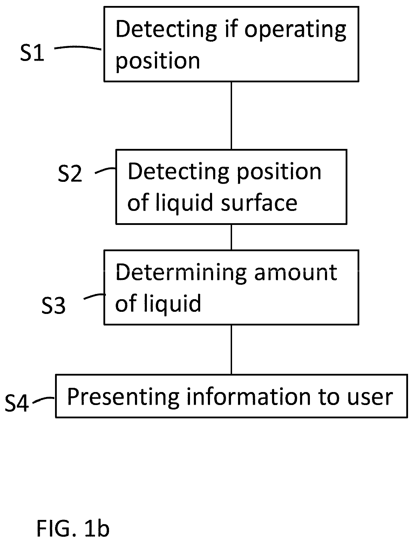

Figure 1b is a flow chart of a method according to one embodiment of the invention. The method steps are described in order below:
S1: Detecting if the mmWave radar sensor 21 is positioned in an operating position in which it is possible to detect a position of a liquid surface in the container 13; 13'. This is an optional step of the method for such systems where the radar sensor 21 can be moved between an operation position and another position, such as by use of a sensor arrangement 1; 1' as shown in Figures 2-5. Hereby the sensor arrangement 1; 1' may comprise a position indicating device 25 (reference to Figures 2-5) configured to indicate if the radar sensor 21 is in the operating position. By detecting a correct position of the radar sensor 21, i.e. if the radar sensor 21 is positioned in a correct operating position or not, a monitoring of liquid level in the container can be made more reliable. If for example the sensor arrangement 1; 1' is moved or removed for refilling of the container 13 the radar sensor 21 will not be able to correctly read a liquid level during this time and it would be beneficial to identify those periods when the radar sensor 21 is not in a correct operating position. In order to be able to keep a process going on during for example refilling of liquid into the container, dead reckoning can in some embodiments be used for estimating liquid levels in the container during times when the radar sensor 21 is not positioned in a correct operating position, i.e. in embodiments where pump metric information is available, information from the one or more pumps 113 in the system 101 can be used during such periods. However, directly when a correct operating position is indicated again by the position indicating device 25 the liquid level can be updated by readings from the radar sensor. A position indicating device 25 can for example comprise an angle sensor 25' or another type of sensor which can detect the position of the radar sensor 21 or a position of a sensor housing 24 comprising said radar sensor 21 which will be discussed in more details below.

This step of detecting can hereby in some embodiments comprise to measure a tilt angle of a sensor housing 24 (reference to Figures 2-5) comprising said radar sensor 21, said tilt angle being measured by an angle sensor 25' provided in the sensor housing 24, whereby the sensor housing can be moved into at least an open and a closed position in relation to the container 13; 13' which two positions can be differentiated by measuring the tilt angle of the sensor housing 24 and whereby the radar sensor is only provided in the operating position when the sensor housing 24 is in the closed position. The step of detecting if the mmWave radar sensor 21 is positioned in an operating position can also in some embodiments comprise to measure the tilt angel of the sensor housing 24 along at least two axes, such as x- and y-axes, and evaluating by comparing tilting along these at least two axes if a measured tilt angle is caused by a changed position of the sensor housing 24 between the open and closed position or by a tilting of the whole container. Hereby, it may be easier to differentiate between the position of the sensor housing and tilting of the whole container. Tilting of the whole container may possibly often comprise tilting around more than one axes, while the sensor housing may be opened and closed via a hinge 27 whereby tilting may be strictly around only one axes.

S2: Detecting a position of a liquid surface in the container 13; 13' by use of the mmWave radar sensor 21. Said step of detecting a position of a liquid surface comprises measuring a distance between the mmWave radar sensor 21 and the liquid surface in the container 13; 13' by use of the radar sensor 21 which is positioned above the liquid surface in connection with the container 13; 13'.

In some embodiments of the invention the step of detecting a position of a liquid surface in the container further comprises subtracting a reference signal from a radar signal received from the mmWave radar sensor 21, said reference signal being measured with the sensor arrangement 1; 1' comprising said mmWave radar sensor positioned in a free measuring environment, wherein said free measuring environment does not comprise any objects, within a measuring range of the mmWave radar sensor, giving an echo to a radar signal sent from the mmWave radar sensor. Hereby the radar sensor can be used for detecting a liquid surface also for close distances from the radar sensor. Normally there is a dead zone close to the radar sensor where nothing can be detected due a strong echo from the radar itself which will hide echoes from other objects within this zone, also called near field of the sensor. For a mmWave radar sensor this dead zone may cover for example distances between 0-10 cm from the radar sensor. This echo from the radar itself comes at least partly from a leakage between the transmitting and receiving antenna in the radar sensor. A part of the echo may also come from the sensor arrangement if it is enclosing the radar sensor. Hereby a mmWave radar sensor normally has to be positioned at least 10 cm from the objects to be detected. According to this embodiment of the invention a reference signal is measured with the sensor arrangement comprising said mmWave radar sensor positioned in a free measuring environment, wherein said free measuring environment does not comprise any objects giving an echo to a radar signal sent from the mmWave radar sensor, within a measuring range of the mmWave radar sensor. By cancelling out this reference signal from the actually measured signal, this strong echo produced by the radar sensor itself is cancelled out and it will be possible to detect other objects within this dead zone. Without this cancelling out of the reference signal, echoes from objects within the dead zone, i.e. less than 10 cm from the radar sensor will be drown out by the strong echo from the radar itself. Hereby, according to this embodiment of the invention, liquid levels in the container can be detected for all distances from the radar sensor between 0 to for example 100 cm in the container. By measuring this reference signal for each individual radar sensor and by subtracting the reference signal from the actual measured radar signal later during actual measuring also objects close to the radar sensor can be detected. Without this feature it would be difficult to distinguish between an empty and a full container. By this invention the liquid surface can be detected at all levels and the monitoring of liquid content in the container is reliable and efficient. Furthermore, a risk for overfilling a container and possible risk of contamination and personal injury is decreased.

Positioned in a free measuring environment can also be called positioned in free or open air which would mean positioned for measuring without any nearby objects giving an echo to the radar signal, wherein nearby can be for example closer than 1m or within a measuring range of the radar sensor. A measuring range of the radar sensor is the range within which this sensor is configured for being used. This could in this invention for example be around 0-100 cm. This reference signal needs to be measured for each individual mmWave radar sensor 21 together with any possibly enclosing sensor arrangement 1; 1', such as the sensor housing 24 shown in the embodiments of the sensor arrangement 1; 1' as shown in Figures 2-5. Even if the distance to the liquid surface cannot be measured to the same precision as for longer distances it will be possible to at least detect the presence of the liquid surface and hereby distinguish from an empty container. Hereby it is possible to detect that the container is full. A more exact measurement of amount of liquid can then be provided to the user when the amount of liquid in the container has decreased and the distance between liquid surface and radar sensor is more than 7-10 cm. Hereby the sensor arrangement can be positioned in connection with the top opening of the container, i.e. a compact sensor arrangement can be provided directly to the top opening of the container and no bulky and high arrangement for positioning the radar sensor at a certain distance above the liquid surface is needed.

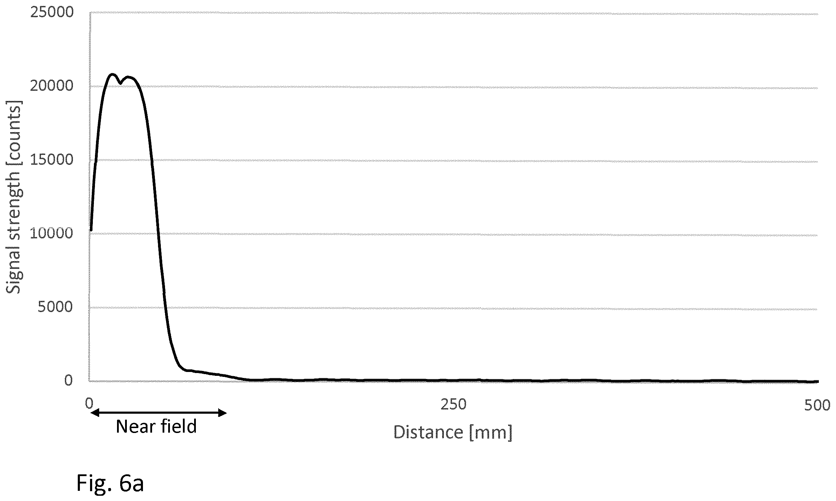

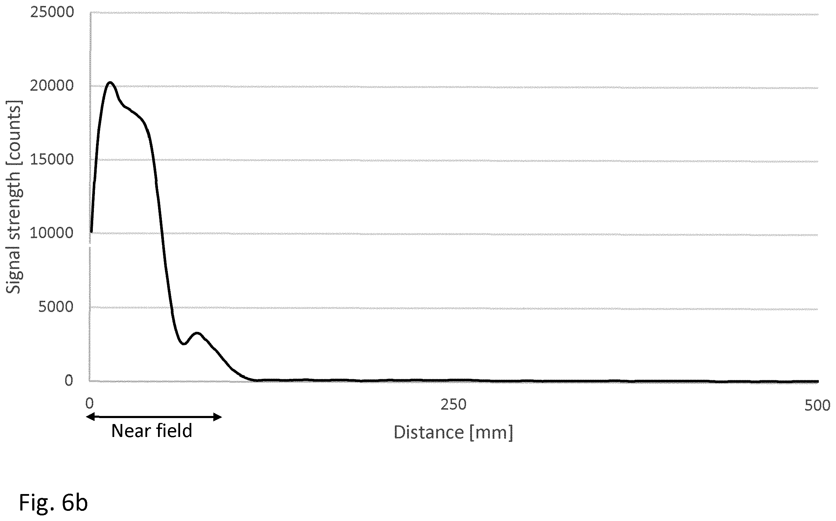

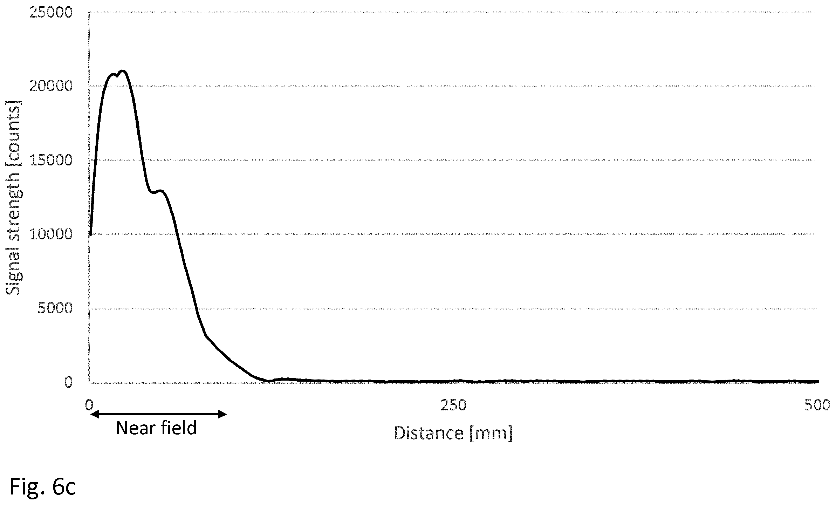

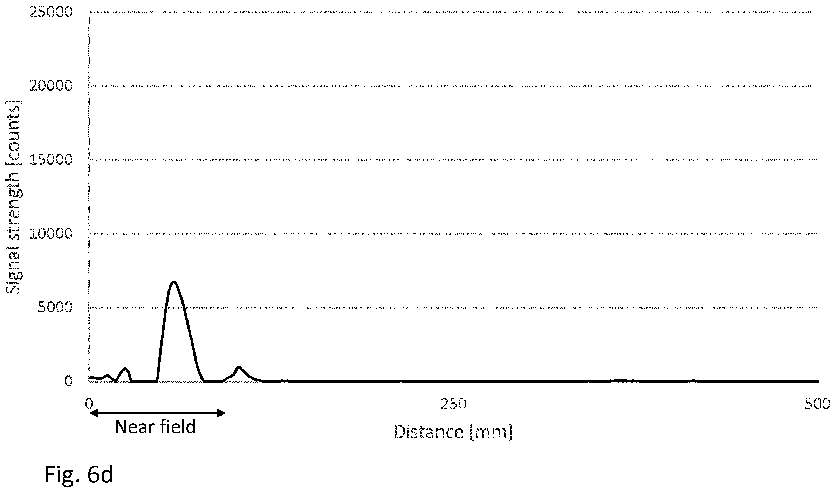

Figures 6a-6d show graphs of radar sensor signals from an example experiment for showing the cancelling of a reference signal and its importance for the detection of objects positioned close to the radar sensor, here called in a near field of the sensor. The near field can for example be around 0-8 cm from the sensor or 0-10 cm from the sensor. In Figure 6a a reference signal for only a separately provided mmWave radar sensor is shown, i.e. the mmWave radar sensor is positioned without any enclosing housing in a free measuring environment as discussed above. Y-axis is signal strength and x-axis is distance in mm measured from the radar sensor. A strong echo can be seen within the near field of the radar sensor. The echoes are from a leakage between the transmitting and receiving antenna in the radar sensor. In Figure 6b a reference signal is shown for a sensor arrangement 1; 1' comprising the mmWave radar sensor, i.e. a sensor housing is enclosing the radar sensor. The sensor arrangement is positioned in a free measuring environment. The echoes in the near field are here both from a leakage between the transmitting and receiving antenna in the radar sensor and from the sensor housing 24. By comparing Figures 6a and 6b it can be seen that it is both the sensor housing and the leakage between the transmitting and receiving antenna giving rise to a near field echo, i.e. a dead zone where it is difficult to distinguish any echo from other nearby objects. In Figure 6c the radar signal from the radar sensor is shown without any cancellation of the reference signal and with an object positioned within the near field of the radar sensor. From this graph it can be seen that it is hard to detect the object in this near field/dead zone of the radar sensor. The echo from the object is at least partly hidden or drown out by the reference signal. In Figure 6d the reference signal has been subtracted from the radar sensor signal, i.e. the reference signal from the sensor arrangement shown in Figure 6b has been subtracted from the radar signal shown in Figure 6c. In the graph of Figure 6d an echo from the object which is positioned in the near field of the radar sensor can clearly be seen. The distance measuring precision may not be as exact as for larger distances from the radar sensor, however there is a clear detection of an object. Hereby it is possible to detect the presence of objects and liquid surfaces also for short distances from the radar sensor whereby it will for example be possible to distinguish a full container from an empty container.

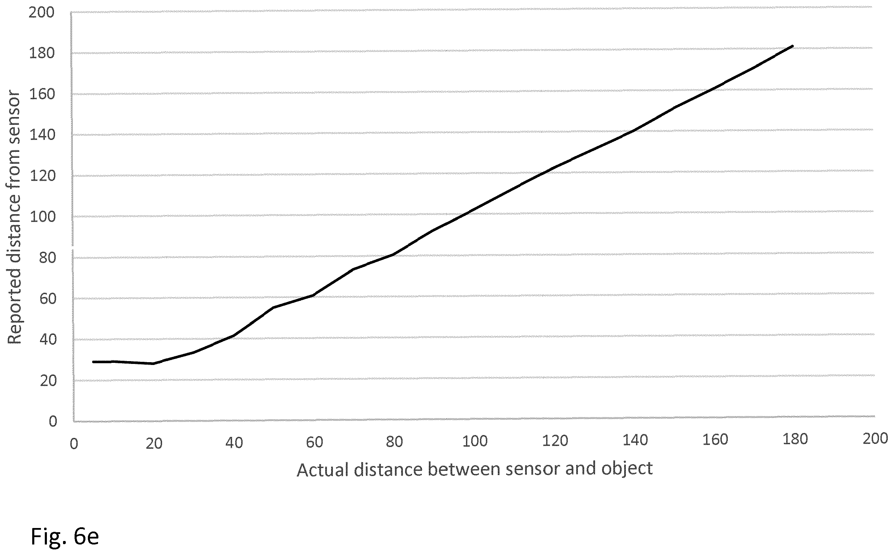

Figure 6e shows a graph of distance measuring accuracy, i.e. actual distance of the object (or liquid surface) from the sensor in mm is shown on the x-axis and distance to the object (or liquid surface) measured and reported by the sensor in mm is shown on the y-axis. The graph shows that objects can be detected at all ranges but objects closer than 30 mm will be detected as being 30 mm away even though they are closer than that.

The method according to the invention comprises furthermore the step of:
S3: Determining amount of liquid in said container 13; 13' based on said detected position of the liquid surface and on prestored geometry information of said container 13; 13'. Prestored geometry information of said container 13; 13' is for example the relation between liquid level and liquid volume at all positions in the container 13; 13'. This can be prestored for standard containers and/or a calibration step can be performed as an initial step of the method which will be described in more details below. Hereby the amount of liquid, such as for example the volume of the liquid or another measure of the amount of liquid such as for example what part of a full container which is left, can be determined for all detected positions of the liquid surface.

S4: Presenting information to a user about said determined amount of liquid. The information could be presented for example on a display in the bench top fluid handling system 101 or on another display connected to the bench top fluid handling system and/or as another type of visible or audible message. The information can include warnings when a determined amount of liquid is below and/or above predefined thresholds in order to avoid overfilling and/or emptying of liquid in the container.

Said step of determining, S3, amount of liquid in said container comprises in some embodiments a primary determination step which is performed when the mmWave radar sensor 21 has been detected to be provided in the operating position. In the primary determination step the determination of amount of liquid is based on said detected position of the liquid surface and on prestored geometry information of said container 13; 13'.

In some embodiments of the invention, where pump metrics from pumps used in the system is available, said step of determining, S3, amount of liquid in said container further comprises a secondary determination step which is performed when the radar sensor 21 has not been detected to be provided in the operating position. Said secondary determination is based on information about pumped liquid volume from one or more pumps 113 provided in the bench top fluid handling system 101 for pumping liquid to and/or from the container 13; 13'. Hereby information about the amount of liquid in the container can be updated also during times when the radar sensor 21 cannot measure correctly. This could be for example at times when the sensor housing 24 comprising the radar sensor 21 has been removed, for example for refilling of liquid into the container or if the sensor housing 24 is not attached correctly such that the radar sensor not is able to read correctly.

Even in the primary determination step, when the radar sensor is detected to be in operation position, pump metrics can in some embodiments be used for specific circumstances. This can for example be for detected positions of the liquid surface being closer to a bottom 42 of the container 13; 13' than a predefined threshold. Said predefined threshold can be for example 0-5 cm. The determination can be based either only on information about pumped liquid volume from the one or more pumps 113 provided in the bench top fluid handling system 101 for pumping liquid to and/or from the container 13; 13' or based on a combination of information from the one or more pumps 113 and on information from the radar sensor 21. Hereby both information from the radar sensor 21 and information from the pumps 113 can be used for determining amount of liquid in said container, either separately or a mix of both. For example, for low liquid levels, i.e. when the container is almost empty it may in some examples be suitable to only rely on pump information because when the liquid level is close to a bottom 42 of the container 13; 13' the radar sensor reading may not be exact enough because it may be difficult to differentiate between the liquid surface and the bottom. This may especially be a problem for liquids having a low dielectric constant but may not be a problem for other liquids. Another situation when detection by the radar sensor may be problematic is if the container or a table where the container is standing is moved such that the liquid inside the container is moving. In such situations pump metrics can be used for determining amount of liquid in the container.

In some embodiments of the invention the method further comprises a step of automatically stop pumping liquid to or from the container 13; 13' when a determined amount of liquid is above and/or below a predetermined threshold. Herbey it can be assured that overfilling and/or emptying of the container is avoided.

The method may in some embodiments also comprise a step of positioning a sensor housing 24 comprising said radar sensor 21 in a closed position covering at least a part of a top opening 11; 11' of the container 13; 13' before the step of detecting a position of a liquid surface in the container, whereby the radar sensor 21 is provided in the operating position for detecting the position of the liquid surface when the sensor housing is positioned in the closed position. The method may furthermore in some embodiments comprise a step of positioning said sensor housing 24 in an open position in which the sensor housing 24 is not covering the top opening 11; 11 of the container 13; 13 when new liquid is to be filled into the container, whereby the radar sensor 21 is not provided in the operating position when the sensor housing is in open position.

In one embodiment of the invention the method further comprises an initial step of determining the relation between liquid surface position and amount of liquid in the container 13; 13' for each new type of container such that container geometry information for each type of used container 13; 13' can be used in the step of determining amount of liquid in said container. This will be an initial step of calibration for new containers to be used.

The method may further in some embodiments comprise a step of presenting a warning to a user if a tilt angle outside a predefined range is measured. The radar sensor may not work correctly if the container is tilted.

The method according to the invention is suitably a method for monitoring liquid content in a container 13; 13' having a height between 10-100 cm and/or a volume between 0,5-220 liter or 0,5-20 liter used in a bench top fluid handling system. Traditionally radar has not been used for small containers because the radar technique is rather bulky and requires comparatively large space and also a distance to the measured object. Hereby the use of radar in containers with a volume in the height and volume ranges mentioned in a bench top fluid handling system would not be close at hand for a skilled person.

According to the invention a bench top fluid handling system 101 is also provided comprising at least one fluid processing component 103, such as for example a chromatography column 103, a control system 111 and at least one container 13; 13' configured to comprise liquid to be pumped to and/or from the at least one component 103. The bench top fluid handling system further comprises at least one sensor arrangement 1; 1' configured to be connected to one of the at least one container 13; 13' and to the control system 111. The sensor arrangement 1; 1' comprises according to the invention a mmWave radar sensor 21 which can be positioned in an operating position in relation to the container in which operating position it can detect a position of a liquid surface in the container 13; 13'. Two different examples of sensor arrangements 1; 1' which can be used in this invention are described in more details below with reference to Figures 2-5. The bench top fluid handling system 101 comprises furthermore a pump 113 and fluid connections 114 configured for pumping liquid between said at least one container 13; 13' and said at least one component 103, wherein said pump 113 is connected to the control system 111.

According to the invention said control system 111 is configured for determining amount of liquid in said container 13; 13' based on said detected position of the liquid surface and on prestored geometry information of said container 13; 13' and configured for presenting to a user information about said determined amount of liquid.

The control system 111 is configured to perform the method of the invention as described above.

In some embodiments of the invention the control system 111 is configured for subtracting a reference signal from a radar signal received from the mmWave radar sensor, said reference signal being measured with the sensor arrangement 1; 1' comprising said mmWave radar sensor positioned in a free measuring environment, wherein said free measuring environment does not comprise any objects, within a measuring range of the mmWave radar sensor, giving an echo to a radar signal sent from the mmWave radar sensor. By subtracting the reference signal, objects positioned in a near field, for example 0-10 cm from the radar sensor can be detected as well as objects further from the sensor, for example 10-100 cm from the radar sensor as discussed above. Hereby the sensor arrangement is configured for detecting a liquid surface also in a near field of the radar sensor, for example 0-10 cm from the radar sensor, in addition to detection of liquid surfaces at larger distances between for example 10-100 cm from the radar sensor.

In one embodiment of the invention the bench top fluid handling system 101 is a chromatography system 101, for example a lab chromatography system, also called a small scale chromatography system, and said at least one other component 103 comprise at least one chromatography column 103.

The sensor arrangement 1; 1' is in some embodiments configured such that it can be positioned in at least a closed and an open position, wherein in the closed position a sensor housing 24 of said sensor arrangement comprising said radar sensor 21 is at least partly covering a top opening 11; 11' of the container 13; 13' and in the open position said sensor housing 24 is not covering the top opening 11; 11' of the container 13; 13'.

The sensor arrangement 1; 1' comprises in some embodiments of the invention an angle sensor 25'.

The control system 111 is in some embodiments configured for detecting if the sensor arrangement 1; 1' is in the closed or open position by analyzing a tilt angle of the sensor arrangement 1; 1' measured by the angle sensor 25' provided in the sensor arrangement.

The at least one container 13; 13' has suitably a height between 10-100 cm and/or a volume between 0,5-220 liter or 0,5-20 liter.

According to the invention a computer program product is also provided. Said computer program product comprises instructions which, when executed in a processor in the control system 111 provided in the bench top fluid handling system 101 as described above, cause the control system 111 to perform the method according to the invention as described above.

Two specific examples of sensor arrangements 1; 1' which can be used in this invention are now described with reference to Figures 2-5.

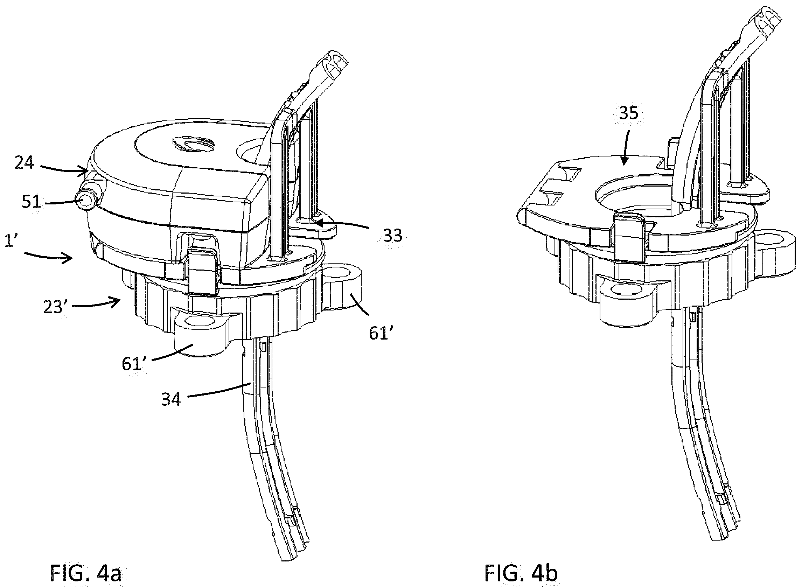

In Figures 2-3 the sensor arrangement 1 comprises a container attaching part 23 having a threaded connection 61 configured to be attached to a container 13 having a threaded top opening 11. The top opening 11 is positioned in an upper part of the container 13 and may also be called a filling hole or inlet. For containers without a threaded top opening an adapter can be used for providing a threaded top opening suitable for connection with the sensor arrangement according to the invention. Such an adapter comprises a threaded part having threads which are compatible with the threads of the container attaching part of the sensor arrangement according to the invention and should be positioned into an opening of the container. In Figures 4-5 the sensor arrangement 1' comprises a container attaching part 23' comprising magnets 61'. This is hereby a sensor arrangement 1' suitable for connection to a container having a top opening 11' without threading. If the container is a metallic container a magnetic connection may be suitable. Other possible connections may comprise a snap connection, a clamp connection or a screw connection. Most of the other details of the sensor arrangements 1; 1' are the same and therefore the same or similar reference numbers are given the details in the two different embodiments and the invention will be described below with reference to all the drawings.

The sensor arrangement 1; 1' is configured to be attached to a top opening 11; 11' of a container 13; 13' used for storing liquid in a bench top fluid handling system, such as a chromatography system 101. The sensor arrangement 1; 1' comprises a mmWave radar sensor 21 as described above. The sensor arrangement 1; 1' comprises a sensor housing 24 comprising said radar sensor 21 and a container attaching part 23; 23' connected to the sensor housing 24 and configured for attaching the sensor arrangement 1; 1' to the container 13; 13' such that the radar sensor 21 can be provided in an operating position for detecting a position of a liquid surface in the container 13; 13'. As discussed above the container attaching part 23; 23' may comprise different types of connection means depending on which type of container to be attached to, such as threading 61 for a container 13 having a threaded top opening 11 or magnets 61' for a metallic container.

According to some embodiments and as shown in both the embodiments of Figures 2-5, the sensor arrangement 1; 1' further comprises a position indicating device 25 configured to indicate if the radar sensor 21 is in the operating position. By detecting a correct position of the radar sensor 21, i.e. if the radar sensor 21 is positioned in a correct operating position or not, a monitoring of liquid level in the container can be made more reliable. If for example the sensor arrangement 1; 1' is moved or removed for refilling of the container 13 the radar sensor 21 will not be able to correctly read a liquid level during this time and it would be beneficial to identify those periods when the radar sensor 21 is not in a correct operating position. In order to be able to keep a process going on during for example refilling of liquid into the container, dead reckoning can be used for estimating liquid levels in the container during times when the radar sensor 21 is not positioned in a correct operating position, i.e. information from the one or more pumps 113 in the system 101 can be used during such periods. However, directly when a correct operating position is indicated again by the position indicating device 25 the liquid level can be updated by readings from the radar sensor. A position indicating device 25 can for example comprise an angle sensor 25' or another type of sensor which can detect the position of the radar sensor 21 or a position of the sensor housing 24 comprising said radar sensor 21 which will be discussed in more details below.

In some embodiments, and as shown in both embodiments of Figures 2-5, the sensor housing 24 can be provided in at least two different positions in relation to the container attaching part 23; 23', wherein one of the positions is a closed position in which the sensor housing 24 is covering at least a part of the top opening 11; 11' of the container 13; 13' and another position is an open position in which the sensor housing 24 is not covering the top opening 11; 11'. The radar sensor 21 is provided in the operating position when the sensor housing 24 is provided in the closed position. When the sensor housing 24 is provided in the open position the top opening 11; 11', or at least a part of the top opening 11; 11' is revealed, i.e. access is enabled to the container and the container can be filled and/or refilled with a liquid. Hereby the container can be refilled without removing the whole sensor arrangement 1; 1'. Only the sensor housing 24 needs to be provided in the open position. Hereby tubes 41 provided into the container 13; 13' can be kept in the container during refilling of the container.

The sensor housing 24 is a housing enclosing the radar sensor 21 and other components provided in the sensor housing, such a suitably a lens 26 provided for focusing the electromagnetic waves from the radar sensor. This could for example be a hyperbolic lens or an FZP (Fresnel Zone Plate) lens. Furthermore, the sensor housing 24 may comprise a processor 31 connected to the radar sensor 21 and possibly also an angle sensor 25' which will be described in more details below. The material of the sensor housing 24 should be a material through which the radar sensor 21 can transmit and receive the electromagnetic waves, such as for example a plastic material. Suitably the material is also resistant towards chemical vapors which may come from the content in the container. Examples of suitable materials for the sensor housing are PEEK (Polyether Ether Katone), PPS (Polyphenylene Sulfide) and PP (PolyPropylene).

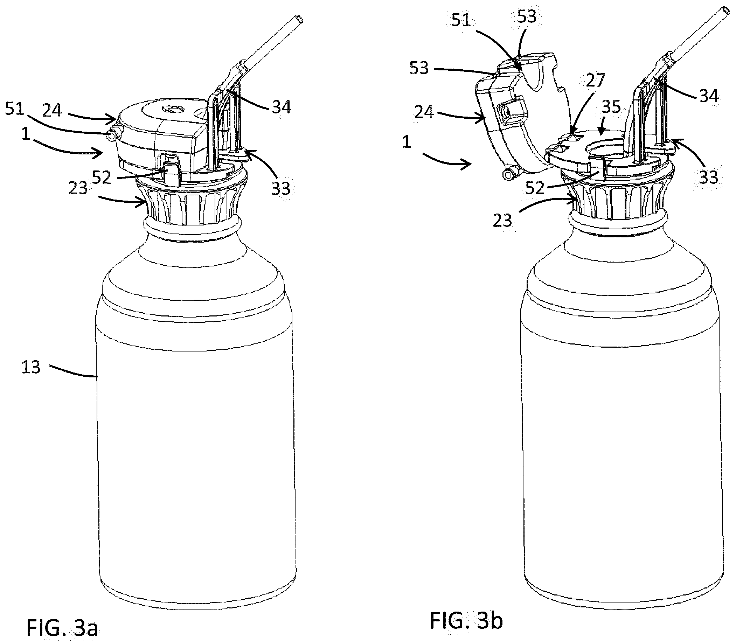

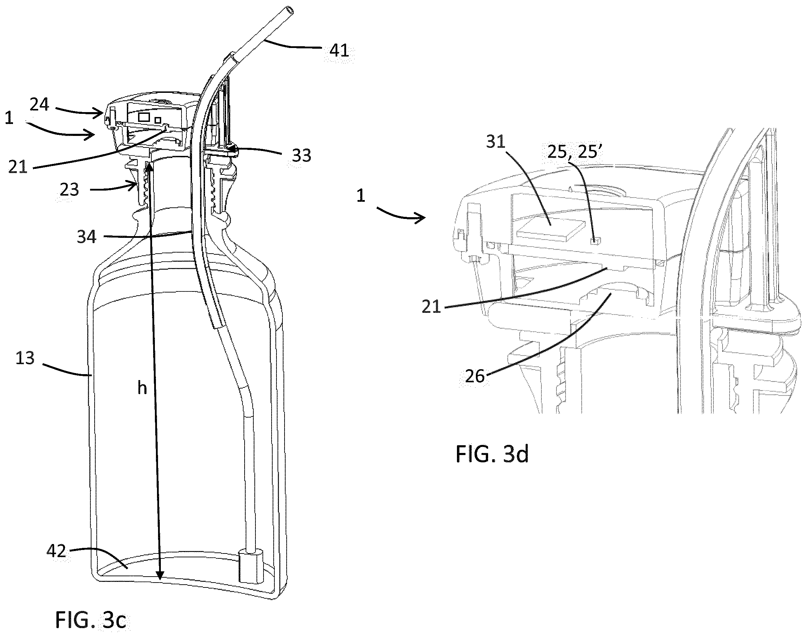

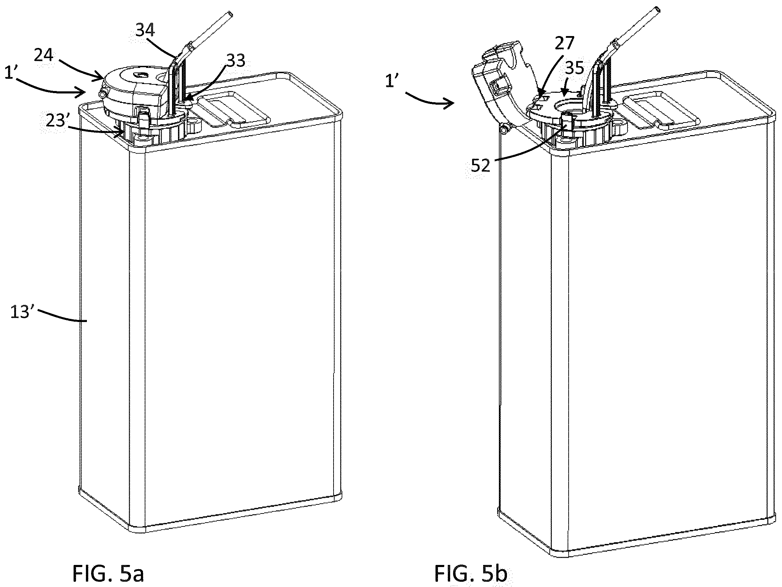

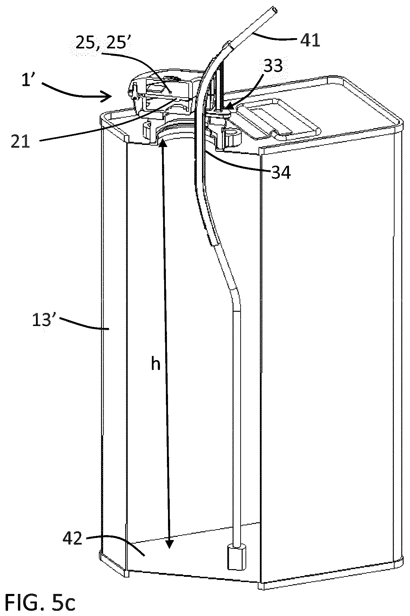

The sensor housing 24 is in some embodiments (and as shown in both the embodiments in Figures 2-5) connected in the sensor arrangement 1; 1' by a hinge 27, whereby the sensor housing 24 can be flipped up from the closed position to the open position for enabling access to the top opening 11; 11' of the container 13; 13'. Another example for connection of the sensor housing 24 in the sensor arrangement 1; 1' can be a swing-out connection or a magnetic connection. In some embodiments the sensor arrangement 1; 1' further comprises a tube holder part 33, which may be an integrated part in the container attaching part 23; 23' or as shown in the embodiments of Figures 2-5, a separate component that can be attached to the container attaching part 23; 23'. The tube holder part 33 is then provided in between the sensor housing 24 and the container attaching part 23; 23' and will be described in further details below. The hinge 27 can best be seen in Figures 3b and 5b where the sensor housing 24 is provided in an open position. In Figures 3a and 5a the sensor housing 24 is provided in the closed position. Another alternative is to connect the sensor housing 24 to the container attaching part 23; 23', possibly via a tube holder part 33, by magnets, possibly together with aligning pins for correct aligning. Also in an example with magnets the sensor housing can be provided in a closed position covering the top opening of the container and the sensor housing can be removed from the container attaching part, i.e. be provided in the open position where at least a part of the top opening 11; 11' of the container is revealed, enabling access for filling the container. When the sensor housing 24 is provided in the open position and the top opening 11; 11' of the container 13; 13' is at least partly revealed new liquid can be filled into the container.

As briefly discussed above the sensor housing 24 may in some embodiments comprise an angle sensor 25' whereby a tilt angle for the sensor housing 24 can be measured. The measured tilt angle can be used to indicate if the sensor housing 24 is in an open or closed position, i.e. it can be used as position indicating device 25 to detect if the radar sensor 21 is in operating position or not. It can also be used to identify if the container 13; 13' with a sensor arrangement 1; 1' attached is tilted. If the container is tilted the measurements by the radar sensor 21 may be disturbed because a measuring passage between the radar sensor and the liquid surface may not be free. Therefore, it may be suitable to warn the user if it is detected that the container possibly is tilted. The sensor housing 24 according to some embodiments comprises a hinge 27 as described above. This hinge 27 can be provided as an extending part of the sensor housing 24 whereby, if the sensor housing 24 would be detached from the container attaching part 23; 23' and positioned for example on a bench or table beside the container it will not lie flat because of the extending hinge 27 whereby the angle sensor 25' will indicate a tilt angle of the sensor housing 24, i.e. not an operating position for the radar sensor 21. This may be advantageous to avoid wrong liquid level measuring. Different tilt angle ranges can be prestored for different common identified situations, such as a container which is tilted by mistake, a container which is tilted by purpose for enabling use of the last liquid in the container, a removed sensor housing lying on the bench as discussed above, an open position of the sensor housing and a closed position of the sensor housing, i.e. an operating position for the radar sensor. Hereby the angle sensor 25' can be used for identifying different situations whereby liquid level measuring can be made more reliable. The angle sensor 25' can in some embodiments measure and differentiate between tilting along different axes, such as both x and y- axes. Hereby, it may be easier to differentiate between the different possible situations such as between the position of the sensor housing and tilting of the whole container. Tilting of the whole container may possibly often comprise tilting around more than one axis. The angle sensor 25' can be connected to a processor 31 in the sensor housing 24 and/or to a control system 111 in the bench top fluid handling system 101. Another alternative for a position indicating device 25 can be a sensor provided in either the container attaching part 23; 23' or in the sensor housing 24 which sensor can detect the close presence of the other of the two parts, for example mechanically, magnetically or optically.

As briefly discussed above the sensor arrangement 1; 1' may in some embodiments (and as shown in both embodiments of Figures 2-5) comprise a tube holder part 33. The tube holder part 33 may be a separate part or an integrated part of the container attaching part 23; 23'. The tube holder part 33 may in some embodiments be a detachable part which can be attached and detached from the container attaching part 23; 23'. The tube holder part 33 is configured for holding tubes 41 to be provided into the container 13; 13' towards one side of the top opening 11; 11'. Hereby the radar sensor 21 will have a free measuring passage, without tubes 41 in the way, between the radar sensor 21, when provided in the operating position, and a liquid surface in the container 13; 13' when the sensor arrangement 1; 1' is attached to the container.

In these embodiments the tube holder part 33 comprises a rail 34 which extends from the top opening 11; 11' of the container 13; 13' both into the container and out from the container when the sensor arrangement 1; 1' is provided to the container. The rail 34 can support one or more tubes 41 which are provided to the container. The rail 34 can suitably be reaching for example at least 5 or at least 6 cm from the top opening 11; 11' towards a bottom 42 of the container 13; 13'. The rail 34 is in some embodiments curved such that tubes 41 provided to the tube holder part 33 are guided away from the measuring passage between the radar sensor and the liquid surface. The rail 34 can suitably have a length such that when attached to the container 13; 13' it will reach down towards the bottom 42 of the container at least a distance such that it passes a neck of a container having a neck, such as a bottle. Hereby tubes 41 which are held by the rail 34 will be pushed out from the measuring passage and will not be flexed back into the measuring passage which could be the case if the rail 34 is curved and made too short, not reaching down to pass a neck of the container. Suitably the sensor arrangement 1; 1' can be designed to fit different sizes of containers and hereby a length of the rail 34 measured from the top opening of the container towards a bottom of the container when the sensor arrangement is attached to the container can be for example at least 5 cm or at least 6 cm in one embodiment of the invention and at least 8 cm in other embodiments.

In the embodiments shown in Figures 2-5 the tube holder part 33 further comprises a ring-shaped securing part 35 connected to the rail 34, wherein said ring shaped securing part is provided in between the container attaching part 23; 23' and the housing part 24. However, another design for attaching the rail 34 in the sensor arrangement 1; 1' would be possible. For example, the rail 34 can be an integrated part of the container attaching part 23; 23'. The ring-shaped securing part 35 may be connected to the container attaching part 23; 23' such that it can rotate in relation to the container attaching part 23; 23' and connected to the housing part 24 such that the housing part 24 can be provided in at least two different positions in relation to the container attaching part 23; 23', wherein said two positions comprise the open position and the closed position. The ring-shaped securing part 35 is ring shaped, i.e. comprises an open center, in order to allow access to the top opening 11; 11' for filling of the container 13; 13' when the housing part 24 is provided in the open position. The ring-shaped securing part 35 may be connected to the container attaching part 23; 23' such that it can rotate in relation to the container attaching part and hereby also the housing part 24 will rotate in relation to the container attaching part 23; 23'. This is suitable when the position of the rail 34 and hereby the position of tubes 41 provided into the container 13; 13' needs to be adjusted. A locking part 52 can be provided for locking the connection between the ring-shaped securing part 35 and the container attaching part 23; 23'. The housing part 24 comprises a recess 51 for receiving the rail 34. The housing part 24 and the tube holder part 33 can be removed from the container attaching part 23; 23' together with the tubes 41 while the container attaching part 23; 23' is kept in place connected to the container 13; 13'. Herbey tubes can be changed conveniently. The connection between the ring-shaped securing part 35 of the tube holder part 33 and the sensor housing 24 can be a hinge 27 or a magnetic connection as discussed above. Hereby the tubes 41 provided in the tube holder part 33 can be kept in position in the container during a filling of the container with new liquid. Hereby a process can be continued to run during filling of new liquid into the container 13; 13'. There may also be an additional snap connection 53 which can be used to secure a closed position of the housing part 24. In Figure 3b the snap connection 53 can be seen as two small extending parts on the sensor housing 24. These extending parts 53 will snap into recesses or openings in the tube holder part 33. The snap connection 53 can possibly also be used as an alternative for the position indicating device 25 for detecting a closed position of the housing part 24 and hereby that the radar sensor 21 is in the operating position. This can be detected by a sensor connected to the snap connection 53. The rail 34 is configured to hold the tubes 41 such that they are kept in substantially the same position within the container during different processes and for different volumes of content in the container, i.e. such that they are kept at a same level inside the container, often close to a bottom 42 of the container, which is suitable for preventing the tubes from being positioned above a liquid surface in the container.

In some embodiments the sensor arrangement comprises a processor 31 connected to the radar sensor 21, wherein said processor 31 is configured to determine amount of liquid in said container 13; 13' based on said detected position of the liquid surface and based on prestored container geometry information. By distributing intelligence out to the sensor arrangement, the communication out from the sensor arrangement to an external control system is less complicated and more robust, i.e. requires less capacity and smaller and cheaper cables can be used for that communication.

Suitably said sensor arrangement 1; 1' further comprises a connection device 51, whereby the radar sensor 21, the processor 31 and the angle sensor 25' can be connected to a control system 111 in the bench top fluid handling system 101 in which said container 13; 13' and sensor arrangement 1; 1' are used. Said connection device 51 can be connected by wire or wirelessly to the control system 111.

## Claims

1. A method for monitoring liquid content in a container (13; 13') used in a bench top fluid handling system (101), whereby liquid is pumped to and/or from said container (13; 13') during a process run in the bench top fluid handling system, said method comprising the steps of:
- detecting a position of a liquid surface in the container (13; 13') by use of a mmWave radar sensor (21) provided in a sensor arrangement (1; 1') attached to the container (13; 13');
- determining amount of liquid in said container (13; 13') based on said detected position of the liquid surface and on prestored geometry information of said container (13; 13'); and
- presenting information to a user about said determined amount of liquid.

2. Method according to claim 1, wherein the step of detecting a position of a liquid surface in the container further comprises subtracting a reference signal from a radar signal received from the mmWave radar sensor, said reference signal being measured with the sensor arrangement (1; 1') comprising said mmWave radar sensor (21) positioned in a free measuring environment, wherein said free measuring environment does not comprise any objects, within a measuring range of the mmWave radar sensor, giving an echo to a radar signal sent from the mmWave radar sensor.

3. Method according to claim 1 or 2, wherein the bench top fluid handling system is a chromatography system.

4. Method according to any one of the preceding claims, further comprising the step of:
- detecting if the mmWave radar sensor (21) is positioned in an operating position in which it is possible to detect a position of a liquid surface in the container (13; 13'),
wherein the step of determining amount of liquid in said container comprises a primary determination step in which the determination is based on said detected position of the liquid surface and on prestored geometry information of said container (13; 13'), which primary determination step is performed when the mmWave radar sensor (21) is detected to be provided in the operating position.

5. Method according to claim 4, wherein said step of detecting if the mmWave radar sensor (21) is positioned in an operating position comprises measuring a tilt angle of a sensor housing (24) comprising said mmWave radar sensor (21), said tilt angle being measured by an angle sensor (25') provided in the sensor housing (24), whereby the sensor housing can be moved into at least an open and a closed position in relation to the container (13; 13') which two positions can be differentiated by measuring the tilt angle of the sensor housing (24) and whereby the mmWave radar sensor is only provided in the operating position when the sensor housing (24) is in the closed position.

6. Method according to claim 5, wherein the step of detecting if the mmWave radar sensor (21) is positioned in an operating position comprises measuring the tilt angel of the sensor housing (24) along at least two axes and evaluating by comparing tilting along these at least two axes if a measured tilt angle is caused by a changed position of the sensor housing (24) between the open and closed position or by a tilting of the whole container.

7. Method according to any one of the claims 4-6, wherein the step of determining amount of liquid in said container further comprises a secondary determination step performed when the mmWave radar sensor (21) is not detected to be provided in the operating position, wherein said secondary determination is based on information about pumped liquid volume from one or more pumps (113) provided in the bench top fluid handling system (101) for pumping liquid to and/or from the container (13; 13').

8. Method according to any one of the preceding claims, wherein the step of determining amount of liquid in said container (13; 13') further is based on information about pumped liquid volume from one or more pumps (113) provided in the bench top fluid handling system (101) for pumping liquid to and/or from the container (13; 13') for detected positions of the liquid surface being closer to a bottom of the container than a predefined threshold.

9. Method according to any one of the preceding claims, further comprising the step of automatically stop pumping liquid to or from the container (13; 13') when a determined amount of liquid is above and/or below a predetermined threshold.

10. Method according to any one of the preceding claims, further comprising the steps of:
- positioning a sensor housing (24) comprising said mmWaveradar sensor (21) in a closed position covering at least a part of a top opening (11; 11') of the container (13; 13') before the step of detecting a position of a liquid surface in the container, whereby the mmWave radar sensor (21) is provided in the operating position for detecting the position of the liquid surface when the sensor housing is positioned in the closed position; and
- positioning said sensor housing (24) in an open position in which the sensor housing (24) is not covering the top opening (11; 11') of the container (13; 13') when new liquid is to be filled into the container, whereby the mmWave radar sensor (21) is not provided in the operating position when the sensor housing is in open position.

11. Method according to any one of the preceding claims, further comprising an initial step of determining the relation between liquid surface position and amount of liquid in the container (13; 13') for each new type of container such that container geometry information for each type of used container (13; 13') can be used in the step of determining amount of liquid in said container.

12. Method according to any one of the preceding claims, wherein this is a method for monitoring liquid content in a container (13; 13') having a height between 10-100 cm and/or a volume between 0,5-20 liter used in a bench top fluid handling system.

13. Method according to any one of the preceding claims, wherein said step of detecting a position of a liquid surface comprises measuring a distance between the mmWave radar sensor (21) and the liquid surface in the container (13; 13') by use of the radar sensor (21) which is positioned above the liquid surface in connection with the container (13; 13').

14. A bench top fluid handling system (101) comprising:
- a control system (111);
- at least one container (13; 13') configured to comprise liquid to be pumped to and/or from at least one other component (103) in the bench top fluid handling system (101);
- at least one sensor arrangement (1; 1') configured to be connected to one of the at least one container (13; 13') and to the control system (111), said sensor arrangement (1; 1') comprising a mmWave radar sensor (21) which can be positioned in an operating position in relation to the container in which operating position it can detect a position of a liquid surface in the container (13; 13');
- a pump (113) and fluid connections (114) configured for pumping liquid between said at least one container (13; 13') and said at least one other component (103), said pump (113) being connected to the control system (111),
wherein said control system (111) is configured for determining amount of liquid in said container (13; 13') based on said detected position of the liquid surface and on prestored geometry information of said container (13; 13') and wherein said control system is configured for presenting to a user information about said determined amount of liquid.

15. Bench top fluid handling system (101) according to claim 14, wherein said control system is configured to perform the method according to any one of the claims 1-13.

16. Bench top fluid handling system (101) according to any one of the claims 14-15, wherein said bench top fluid handling system is a chromatography system and wherein said at least one other component (103) comprise at least one chromatography column (103).

17. Bench top fluid handling system (101) according to any one of the claims 14-16, wherein the sensor arrangement (1; 1') is configured such that it can be positioned in at least a closed and an open position, wherein in the closed position a sensor housing (24) of said sensor arrangement comprising said mmWave radar sensor (21) is at least partly covering a top opening (11; 11') of the container (13; 13') and in the open position said sensor housing (24) is not covering the top opening (11; 11') of the container (13; 13').

18. Bench top fluid handling system (101) according to any one of the claims 14-17, wherein the sensor arrangement (1; 1') comprises an angle sensor (25').

19. Bench top fluid handling system (101) according to any one of the claims 14-18, wherein the container has a height between 10-100 cm and/or a volume between 0,5-20 liter.

20. A computer program product comprising instructions which, when executed in a processor in a control system (111) provided in a bench top fluid handling system (101), cause the control system (111) to perform the method according to any one of the claims 1-13.

## Patentansprüche

1. Verfahren zum Überwachen eines Flüssigkeitsgehalts in einem Behälter (13; 13'), der in einem Tischplattenfluidhandhabungssystem (101) verwendet wird, wobei Flüssigkeit während eines in dem Tischplattenfluidhandhabungssystem laufen gelassenen Vorgangs in den und/oder aus dem Behälter (13; 13') gepumpt wird, wobei das Verfahren die folgenden Schritte umfasst:
- Erfassen einer Position einer Flüssigkeitsoberfläche in dem Behälter (13; 13') durch Verwendung eines mm-Wellen-Radarsensors (21), der in einer Sensoranordnung (1; 1') bereitgestellt ist, die an dem Behälter (13; 13') befestigt ist;
- Bestimmen einer Flüssigkeitsmenge in dem Behälter (13; 13') basierend auf der erfassten Position der Flüssigkeitsoberfläche und auf vorgespeicherten Geometrieinformationen des Behälters (13; 13'); und
- Darstellen von Informationen über die bestimmte Flüssigkeitsmenge für einen Benutzer.

2. Verfahren nach Anspruch 1, wobei der Schritt des Erfassens einer Position einer Flüssigkeitsoberfläche in dem Behälter ferner ein Subtrahieren eines Referenzsignals von einem von dem mm-Wellen-Radarsensor empfangenen Radarsignal umfasst, wobei das Referenzsignal mit der Sensoranordnung (1; 1') gemessen wird, umfassend den mm-Wellen-Radarsensor (21), der in einer freien Messumgebung positioniert ist, wobei die freie Messumgebung keine Objekte innerhalb eines Messbereichs des mm-Wellen-Radarsensors umfasst, die ein Echo auf ein von dem mm-Wellen-Radarsensor gesendetes Radarsignal geben.

3. Verfahren nach Anspruch 1 oder 2, wobei das Tischplattenfluidhandhabungssystem ein Chromatographiesystem ist.

4. Verfahren nach einem der vorhergehenden Ansprüche, ferner umfassend den folgenden Schritt:
- Erfassen, ob der mm-Wellen-Radarsensor (21) in einer Betriebsposition positioniert ist, in der es möglich ist, eine Position einer Flüssigkeitsoberfläche in dem Behälter (13; 13') zu erfassen,
wobei der Schritt des Bestimmens der Flüssigkeitsmenge in dem Behälter einen primären Bestimmungsschritt umfasst, in dem die Bestimmung auf der erfassten Position der Flüssigkeitsoberfläche und auf vorgespeicherten Geometrieinformationen des Behälters (13; 13') basiert, wobei der primäre Bestimmungsschritt durchgeführt wird, wenn erfasst wird, dass der mm-Wellen-Radarsensor (21) in der Betriebsposition bereitgestellt ist.

5. Verfahren nach Anspruch 4, wobei der Schritt des Erfassens, ob der mm-Wellen-Radarsensor (21) in einer Betriebsposition positioniert ist, ein Messen eines Neigungswinkels eines Sensorgehäuses (24) umfasst, umfassend den mm-Wellen-Radarsensor (21), wobei der Neigungswinkel durch einen Winkelsensor (25') gemessen wird, der in dem Sensorgehäuse (24) bereitgestellt ist, wodurch das Sensorgehäuse in mindestens eine offene und eine geschlossene Position in Relation zu dem Behälter (13; 13') bewegt werden kann, wobei die zwei Positionen durch Messen des Neigungswinkels des Sensorgehäuses (24) unterschieden werden können und wobei der mm-Wellen-Radarsensor nur in der Betriebsposition bereitgestellt ist, wenn das Sensorgehäuse (24) in der geschlossenen Position ist.

6. Verfahren nach Anspruch 5, wobei der Schritt des Erfassens, ob der mm-Wellen-Radarsensor (21) in einer Betriebsposition positioniert ist, ein Messen des Neigungswinkels des Sensorgehäuses (24) entlang mindestens zweier Achsen und ein Auswerten durch Vergleichen eines Neigens entlang dieser mindestens zwei Achsen umfasst, ob ein gemessener Neigungswinkel durch eine veränderte Position des Sensorgehäuses (24) zwischen der offenen und geschlossenen Position oder durch Neigen des gesamten Behälters bewirkt wird.

7. Verfahren nach einem der Ansprüche 4 bis 6, wobei der Schritt des Bestimmens der Flüssigkeitsmenge in dem Behälter ferner einen sekundären Bestimmungsschritt umfasst, der durchgeführt wird, wenn nicht erfasst wird, dass der mm-Wellen-Radarsensor (21) in der Betriebsposition bereitgestellt ist, wobei die sekundäre Bestimmung auf Informationen über das gepumpte Flüssigkeitsvolumen von einer oder mehreren Pumpen (113) basiert, die in dem Tischplattenfluidhandhabungssystem (101) zum Pumpen von Flüssigkeit in den und/oder aus dem Behälter (13; 13') bereitgestellt sind.

8. Verfahren nach einem der vorhergehenden Ansprüche, wobei der Schritt des Bestimmens der Flüssigkeitsmenge in dem Behälter (13; 13') ferner auf Informationen über das gepumpte Flüssigkeitsvolumen von einer oder mehreren Pumpen (113) basiert, die in dem Tischplattenfluidhandhabungssystem (101) zum Pumpen von Flüssigkeit in den und/oder aus dem Behälter (13; 13') für erfasste Positionen der Flüssigkeitsoberfläche bereitgestellt sind, die näher an einem Boden des Behälters sind als ein vordefinierter Schwellenwert.

9. Verfahren nach einem der vorhergehenden Ansprüche, ferner umfassend den Schritt eines automatischen Stoppens des Pumpens von Flüssigkeit in den oder aus dem Behälter (13; 13'), wenn eine bestimmte Flüssigkeitsmenge über und/oder unter einem vorbestimmten Schwellenwert ist.

10. Verfahren nach einem der vorhergehenden Ansprüche, ferner umfassend die folgenden Schritte:
- Positionieren eines Sensorgehäuses (24), umfassend den mm-Wellenradar-Sensor (21), in einer geschlossenen Position, die mindestens einen Teil einer oberen Öffnung (11; 11') des Behälters (13; 13') abdeckt, vor dem Schritt des Erfassens einer Position einer Flüssigkeitsoberfläche in dem Behälter, wodurch der mm-Wellen-Radarsensor (21) in der Betriebsposition zum Erfassen der Position der Flüssigkeitsoberfläche bereitgestellt ist, wenn das Sensorgehäuse in der geschlossenen Position positioniert ist; und
- Positionieren des Sensorgehäuses (24) in einer offenen Position, in der das Sensorgehäuse (24) die obere Öffnung (11; 11') des Behälters (13; 13') nicht abdeckt, wenn neue Flüssigkeit in den Behälter gefüllt werden soll, wodurch der mm-Wellen-Radarsensor (21) nicht in der Betriebsposition bereitgestellt ist, wenn das Sensorgehäuse in der offenen Position ist.

11. Verfahren nach einem der vorhergehenden Ansprüche, ferner umfassend einen anfänglichen Schritt eines derartigen Bestimmens der Relation zwischen der Flüssigkeitsoberflächenposition und der Flüssigkeitsmenge in dem Behälter (13; 13') für jede neue Behälterart, dass die Behältergeometrieinformationen für jede Art eines verwendeten Behälters (13; 13') in dem Schritt des Bestimmens der Flüssigkeitsmenge in dem Behälter verwendet werden können.

12. Verfahren nach einem der vorhergehenden Ansprüche, wobei dies ein Verfahren zum Überwachen des Flüssigkeitsgehalts in einem Behälter (13; 13') ist, der eine Höhe zwischen 10-100 cm und/oder ein Volumen zwischen 0,5-20 Liter aufweist, der in einem Tischplattenfluidhandhabungssystem verwendet wird.

13. Verfahren nach einem der vorhergehenden Ansprüche, wobei der Schritt des Erfassens einer Position einer Flüssigkeitsoberfläche ein Messen eines Abstands zwischen dem mm-Wellen-Radarsensor (21) und der Flüssigkeitsoberfläche in dem Behälter (13; 13') durch Verwendung des Radarsensors (21) umfasst, der über der Flüssigkeitsoberfläche in Verbindung mit dem Behälter (13; 13') positioniert ist.

14. Tischplattenfluidhandhabungssystem (101), umfassend:
- ein Steuerungssystem (111);
- mindestens einen Behälter (13; 13'), der dazu konfiguriert ist, Flüssigkeit zu umfassen, die zu und/oder von mindestens einer anderen Komponente (103) in dem Tischplattenfluidhandhabungssystem (101) gepumpt werden soll;
- mindestens eine Sensoranordnung (1; 1'), die dazu konfiguriert ist, mit einem des mindestens einen Behälters (13; 13') und mit dem Steuerungssystem (111) verbunden zu sein, wobei die Sensoranordnung (1; 1') einen mm-Wellen-Radarsensor (21) umfasst, der in einer Betriebsposition in Relation zu dem Behälter positioniert werden kann, wobei er in der Betriebsposition eine Position einer Flüssigkeitsoberfläche in dem Behälter (13; 13') erfassen kann;
- eine Pumpe (113) und Fluidverbindungen (114), die dazu konfiguriert sind, Flüssigkeit zwischen dem mindestens einen Behälter (13; 13') und der mindestens einen anderen Komponente (103) zu pumpen, wobei die Pumpe (113) mit dem Steuerungssystem (111) verbunden ist,
wobei das Steuerungssystem (111) dazu konfiguriert ist, die Flüssigkeitsmenge in dem Behälter (13; 13') basierend auf der erfassten Position der Flüssigkeitsoberfläche und auf vorgespeicherten Geometrieinformationen des Behälters (13; 13') zu bestimmen, und wobei das Steuerungssystem dazu konfiguriert ist, Informationen über die bestimmte Flüssigkeitsmenge für einen Benutzer darzustellen.

15. Tischplattenfluidhandhabungssystem (101) nach Anspruch 14, wobei das Steuerungssystem dazu konfiguriert ist, das Verfahren nach einem der Ansprüche 1 bis 13 durchzuführen.

16. Tischplattenfluidhandhabungssystem (101) nach einem der Ansprüche 14 bis 15, wobei das Tischplattenfluidhandhabungssystem ein Chromatographiesystem ist und wobei die mindestens eine andere Komponente (103) mindestens eine Chromatographiesäule (103) umfasst.

17. Tischplattenfluidhandhabungssystem (101) nach einem der Ansprüche 14 bis 16, wobei die Sensoranordnung (1; 1') derart konfiguriert ist, dass sie mindestens in einer geschlossenen und einer offenen Position positioniert werden kann, wobei ein Sensorgehäuse (24) der Sensoranordnung, umfassend den mm-Wellen-Radarsensor (21), in der geschlossenen Position mindestens teilweise eine obere Öffnung (11; 11') des Behälters (13; 13') abdeckt und das Sensorgehäuse (24) in der offenen Position die obere Öffnung (11; 11') des Behälters (13; 13') nicht abdeckt.

18. Tischplattenfluidhandhabungssystem (101) nach einem der Ansprüche 14 bis 17, wobei die Sensoranordnung (1; 1') einen Winkelsensor (25') umfasst.

19. Tischplattenfluidhandhabungssystem (101) nach einem der Ansprüche 14 bis 18, wobei der Behälter eine Höhe zwischen 10-100 cm und/oder ein Volumen zwischen 0,5-20 Litern aufweist.

20. Computerprogrammprodukt, umfassend Anweisungen, die, wenn sie in einem Prozessor in einem Steuerungssystem (111) ausgeführt werden, das in einem Tischplattenfluidhandhabungssystem (101) bereitgestellt ist, bewirken, dass das Steuerungssystem (111) das Verfahren nach einem der Ansprüche 1 bis 13 durchführt.

## Revendications

1. Procédé de surveillance du contenu liquide dans un récipient (13 ; 13') utilisé dans un système de manipulation de fluides de paillasse (101), moyennant quoi du liquide est pompé vers et/ou en provenance dudit récipient (13 ; 13') au cours d'un processus exécuté dans le système de manipulation de fluides de paillasse, ledit procédé comprenant les étapes consistant à :
- détecter une position d'une surface de liquide dans le récipient (13 ; 13') à l'aide d'un capteur radar à ondes millimétriques (21) fourni dans un agencement de capteurs (1 ; 1') fixé au récipient (13 ; 13') ;
- déterminer une quantité de liquide dans ledit récipient (13 ; 13') sur la base de ladite position détectée de la surface de liquide et des informations géométriques préenregistrées dudit récipient (13 ; 13') ; et
- présenter à un utilisateur les informations concernant ladite quantité de liquide déterminée.

2. Procédé selon la revendication 1, dans lequel l'étape de détection d'une position d'une surface de liquide dans le récipient comprend en outre la soustraction d'un signal de référence d'un signal radar reçu en provenance du capteur radar à ondes millimétriques, ledit signal de référence étant mesuré avec l'agencement de capteurs (1 ; 1') comprenant ledit capteur radar à ondes millimétriques (21) positionné dans un environnement de mesure libre, dans lequel ledit environnement de mesure libre ne comprend aucun objet, au sein d'une plage de mesure du capteur radar à ondes millimétriques, produisant un écho à un signal radar envoyé par le capteur radar à ondes millimétriques.

3. Procédé selon la revendication 1 ou 2, dans lequel le système de manipulation de fluides de paillasse est un système de chromatographie.

4. Procédé selon l'une quelconque des revendications précédentes, comprenant en outre l'étape consistant à :
- détecter si le capteur radar à ondes millimétriques (21) est positionné dans une position de fonctionnement dans laquelle il est possible de détecter une position d'une surface de liquide dans le récipient (13 ; 13'),
dans lequel l'étape de détermination d'une quantité de liquide dans ledit récipient comprend une étape de détermination primaire dans laquelle la détermination est basée sur ladite position détectée de la surface de liquide et sur les informations géométriques préenregistrées dudit récipient (13 ; 13'), laquelle étape de détermination primaire est effectuée lorsque le capteur radar à ondes millimétriques (21) est détecté comme étant présent dans la position de fonctionnement.

5. Procédé selon la revendication 4, dans lequel ladite étape de détection du positionnement ou non du capteur radar à ondes millimétriques (21) dans une position de fonctionnement comprend la mesure d'un angle d'inclinaison d'un boîtier de capteur (24) comprenant ledit capteur radar à ondes millimétriques (21), ledit angle d'inclinaison étant mesuré par un capteur d'angle (25') prévu dans le boîtier de capteur (24), moyennant quoi le boîtier de capteur peut être déplacé dans au moins une position ouverte et une position fermée par rapport au récipient (13 ; 13'), lesquelles deux positions pouvent être différenciées en mesurant l'angle d'inclinaison du boîtier de capteur (24), et moyennant quoi le capteur radar à ondes millimétriques ne se trouve dans la position de fonctionnement que lorsque le boîtier de capteur (24) se trouve dans la position fermée.

6. Procédé selon la revendication 5, dans lequel l'étape de détection du positionnement ou non du capteur radar à ondes millimétriques (21) dans une position de fonctionnement comprend la mesure de l'angle d'inclinaison du boîtier de capteur (24) le long d'au moins deux axes et l'évaluation, par comparaison de l'inclinaison le long de ces au moins deux axes, si un angle d'inclinaison mesuré est provoqué par un changement de position du boîtier de capteur (24) entre la position ouverte et la position fermée ou par une inclinaison de l'ensemble du récipient.

7. Procédé selon l'une quelconque des revendications 4 à 6, dans lequel l'étape de détermination de la quantité de liquide dans ledit récipient comprend en outre une étape de détermination secondaire effectuée lorsque le capteur radar à ondes millimétriques (21) n'est pas détecté comme étant présent dans la position de fonctionnement, dans lequel ladite détermination secondaire est basée sur des informations concernant le volume de liquide pompé par une ou plusieurs pompes (113) prévues dans le système de manipulation de fluides de paillasse (101) pour pomper le liquide vers et/ou en provenance du récipient (13 ; 13').

8. Procédé selon l'une quelconque des revendications précédentes, dans lequel l'étape de détermination d'une quantité de liquide dans ledit récipient (13 ; 13') est en outre basée sur des informations concernant le volume de liquide pompé par une ou plusieurs pompes (113) prévues dans le système de manipulation de fluides de paillasse (101) pour pomper le liquide vers et/ou en provenance du récipient (13 ; 13') pour les positions détectées de la surface de liquide qui sont plus proches du fond du récipient qu'un seuil prédéfini.

9. Procédé selon l'une quelconque des revendications précédentes, comprenant en outre l'étape d'arrêt automatique du pompage de liquide vers ou en provenance du récipient (13 ; 13') lorsqu'une quantité déterminée de liquide est supérieure et/ou inférieure à un seuil prédéterminé.

10. Procédé selon l'une quelconque des revendications précédentes, comprenant en outre les étapes consistant à :
- positionner un boîtier de capteur (24) comprenant ledit capteur radar à ondes millimétriques (21) dans une position fermée recouvrant au moins une partie d'une ouverture supérieure (11 ; 11') du récipient (13 ; 13'), avant l'étape de détection d'une position d'une surface de liquide dans le récipient, moyennant quoi le capteur radar à ondes millimétriques (21) est prévu dans la position de fonctionnement pour détecter la position de la surface de liquide lorsque le boîtier de capteur est positionné dans la position fermée ; et
- positionner ledit boîtier de capteur (24) dans une position ouverte dans laquelle le boîtier de capteur (24) ne recouvre pas l'ouverture supérieure (11 ; 11') du récipient (13 ; 13') lorsqu'un nouveau liquide doit être introduit dans le récipient, moyennant quoi le capteur radar à ondes millimétriques (21) n'est pas prévu dans la position de fonctionnement lorsque le boîtier de capteur se trouve dans la position ouverte.

11. Procédé selon l'une quelconque des revendications précédentes, comprenant en outre une étape initiale de détermination de la relation entre la position de surface de liquide et la quantité de liquide dans le récipient (13 ; 13') pour chaque nouveau type de récipient, de sorte que les informations géométriques de récipient pour chaque type de récipient utilisé (13 ; 13') puissent être utilisées dans l'étape de détermination de la quantité de liquide dans ledit récipient.

12. Procédé selon l'une quelconque des revendications précédentes, dans lequel il s'agit d'un procédé de surveillance du contenu liquide dans un récipient (13 ; 13') ayant une hauteur comprise entre 10 et 100 cm et/ou un volume compris entre 0,5 et 20 litres utilisé dans un système de manipulation de fluides de paillasse.

13. Procédé selon l'une quelconque des revendications précédentes, dans lequel ladite étape de détection d'une position d'une surface de liquide comprend la mesure d'une distance entre le capteur radar à ondes millimétriques (21) et la surface de liquide dans le récipient (13 ; 13') à l'aide du capteur radar (21) qui est positionné au-dessus de la surface de liquide en relation avec le récipient (13 ; 13').

14. Système de manipulation de fluides de paillasse (101) comprenant :
- un système de commande (111) ;
- au moins un récipient (13 ; 13') configuré pour comprendre le liquide à pomper vers et/ou en provenance d'au moins un autre composant (103) dans le système de manipulation de fluides de paillasse (101) ;
- au moins un agencement de capteurs (1 ; 1') configuré pour être connecté à l'un parmi l'au moins un récipient (13 ; 13') et au système de commande (111), ledit agencement de capteurs (1 ; 1') comprenant un capteur radar à ondes millimétriques (21) qui peut être positionné dans une position de fonctionnement par rapport au récipient, position de fonctionnement dans laquelle il peut détecter une position d'une surface de liquide dans le récipient (13 ; 13') ;
- une pompe (113) et des raccords de fluide (114) configurés pour pomper le liquide entre ledit au moins un récipient (13 ; 13') et ledit au moins un autre composant (103), ladite pompe (113) étant connectée au système de commande (111),
dans lequel ledit système de commande (111) est configuré pour déterminer la quantité de liquide dans ledit récipient (13 ; 13') sur la base de ladite position détectée de la surface de liquide et des informations géométriques préenregistrées dudit récipient (13 ; 13') et dans lequel ledit système de commande est configuré pour présenter à un utilisateur les informations concernant ladite quantité de liquide déterminée.

15. Système de manipulation de fluides de paillasse (101) selon la revendication 14, dans lequel ledit système de commande est configuré pour effectuer le procédé selon l'une quelconque des revendications 1 à 13.

16. Système de manipulation de fluides de paillasse (101) selon l'une quelconque des revendications 14 à 15, dans lequel ledit système de manipulation de fluides de paillasse est un système de chromatographie et dans lequel ledit au moins un autre composant (103) comprend au moins une colonne de chromatographie (103).

17. Système de manipulation de fluides de paillasse (101) selon l'une quelconque des revendications 14 à 16, dans lequel l'agencement de capteurs (1 ; 1') est configuré de sorte à pouvoir être positionné dans au moins une position fermée et une position ouverte, dans lequel, dans la position fermée, un boîtier de capteur (24) dudit agencement de capteurs comprenant ledit capteur radar à ondes millimétriques (21) recouvre au moins en partie une ouverture supérieure (11 ; 11') du récipient (13 ; 13') et, dans la position ouverte, ledit boîtier de capteur (24) ne recouvre pas l'ouverture supérieure (11 ; 11') du récipient (13 ; 13').

18. Système de manipulation de fluides de paillasse (101) selon l'une quelconque des revendications 14 à 17, dans lequel l'agencement de capteurs (1; 1') comprend un capteur d' angle (25').

19. Système de manipulation de fluides de paillasse (101) selon l'une quelconque des revendications 14 à 18, dans lequel le récipient a une hauteur comprise entre 10 et 100 cm et/ou un volume compris entre 0,5 et 20 litres.

20. Produit-programme informatique comprenant des instructions qui, lorsqu'elles sont exécutées dans un processeur d'un système de commande (111) prévu dans un système de manipulation de fluides de paillasse (101), amènent le système de commande (111) à effectuer le procédé selon l'une quelconque des revendications 1 à 13.
